Europäisches Patentamt

European Patent Office

Office européen des brevets

(11) Publication number: **0 359 388**
**A2**

# EUROPEAN PATENT APPLICATION

(21) Application number: 89308059.8

(51) Int. Cl.⁵: **B60C 17/06**

(22) Date of filing: 08.08.89

(30) Priority: 13.08.88 GB 8819324

(43) Date of publication of application:
21.03.90 Bulletin 90/12

(84) Designated Contracting States:
DE FR GB

(71) Applicant: **SUMITOMO RUBBER INDUSTRIES LIMITED**
No. 1-1, Tsutsui-cho 1-chome
Chuo-ku Kobe-shi Hyogo 651(JP)

(72) Inventor: **Kemp, Ian**
23 Brookside Way Wilnecote
Tamworth Staffs(GB)

(74) Representative: **Stewart, Charles Geoffrey**
SP TYRES UK LIMITED Tyre Technical
Division
Fort Dunlop Erdington Birmingham B24
9QT(GB)

(54) An emergency support ring for a pneumatic tyre and wheel rim assembly.

(57) An emergency support ring for a pneumatic tyre and wheel rim assembly comprises a continuous ring of elastomeric material having a radially inner surface (1) to contact a wheel rim and a radially outer support surface (2) to contact and support the inner tread of a deflated pneumatic tyre characterised by at least a pair of diametrically spaced radially extending cuts (3,4) extending inwardly from the outer surface (2) towards, but not reaching to, the inner surface (1) such that the ring may readily be flattened in the radial direction when loaded at diametrically spaced points between the cuts.

Fig.1.

# AN EMERGENCY SUPPORT RING FOR A PNEUMATIC TYRE AND WHEEL RIM ASSEMBLY

This invention relates to an emergency tyre support ring and in particular to an elastomeric material support ring.

Such support rings are fitted inside a tyre and wheel rim assembly and seat on the central or well portion of the wheel rim such that if the tyre is deflated the inside of the tyre read region contacts the radially outer surface of the support ring and the resultant assembly gives a run flat assembly.

One great difficulty with known support rings is the problem of inserting the ring into the tyre because of the semi rigid and circumferential reinforced beads of the tyre. One well known assembly has to be made by using a large press to compress the solid rubber supporting ring so that a retaining band can be fitted to hold the ring flattened to an oval shape. To attach a tyre a large press is needed and this makes assembly impossible away from a suitable press.

It is an object of the present invention to provide a support ring which can be fitted without the need for a press but which performs inside a tyre in the same way as previously known support rings.

According to one aspect of the present invention an emergency support rink for a pneumatic tyre and wheel rim assembly comprises a continuous ring of elastomeric material having a radially inner surface to contact a wheel rim and a radially outer support surface to contact and support the inner tread of a deflated pneumatic tyre wherein a first pair of diametrically-spaced, radially extending cuts are provided extending inwardly from the outer surface towards, but not reaching to, the inner surface such that the ring may readily be flattened in the radial direction when loaded at diametrically spaced points between the cuts.

Preferably the support ring also includes a second pair of diametrically spaced, radially extending cuts which extend outwardly from the inner surface towards but not reaching to, the outer surface the said second pair each being positioned midway between the cuts of the first pair.

Thus to flatten the support ring so that it can be inserted into the torroidal cavity of a tyre through the hoop of one bead of the tyre the ring is loaded by radially inward loads applied at the position of the second cuts. The ring is easily compressed because the first cuts open at the outside of the ring and the second cuts open at the inside of the ring.

Preferably the first and second pairs of cuts each extend for 50% to 95% of the radial thickness of the support ring. More preferably the cuts extend for 85-95% of the radial extent.

Each cut is preferably made by slitting a solid ring so that no volume of elastomeric material is removed. Alternatively, the cuts may be slots having a width less than 2mm which slots may be moulded into the ring on manufacture. The closed ends of the slits or slots may be sharp or more preferably may comprise a circular or radiused end so that crack propagation from the slot end is minimised when the ring is deflected.

Short cuts may additionally be used in line with the first cuts but at the other side of the ring section.

The ring may comprise any elastomeric material having the required properties for supporting a deflated tyre and sufficient flexibility including to be deflected for assembly. Rubber, however, is a preferred material.

Further aspects of the present invention will be apparent from the following description, by way of example only of one embodiment in which:-

Fig. 1 shows a side view of a support ring according to the present invention.

Fig.2. shows a side view of the ring of figure 1 in the deflected state.

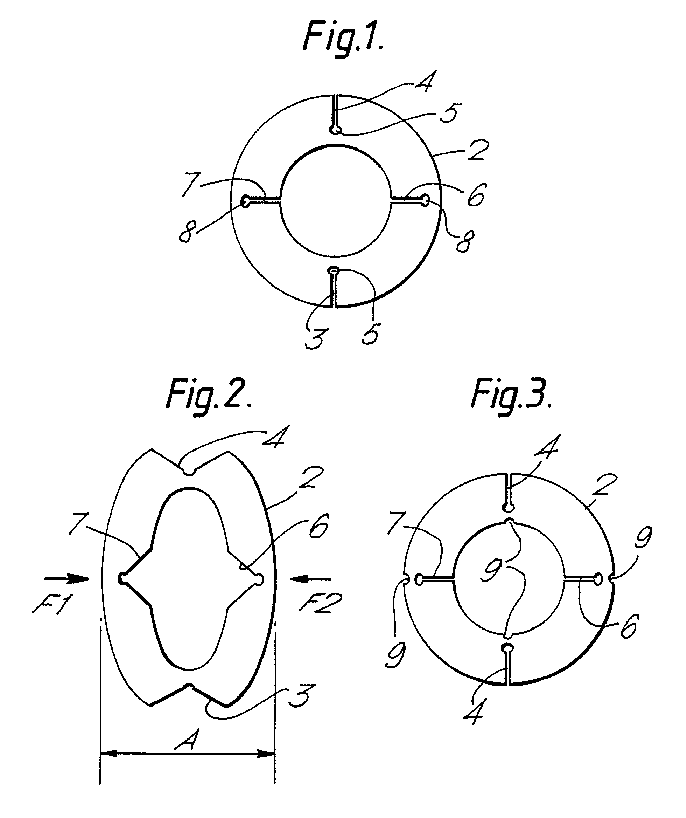

The support ring shown in figure 1 comprises a substantially solid rubber ring having a rectangular cross section and which in plan shape is as shown. The cross section of the ring is not critical to the present invention and it may have any of the known cross sections required for support rings including plain rectangular cross sections or indeed a 'U' shaped cross section both of which are known in the art.

The ring comprises an inner curved surface (1) and an outer curved surface (2) and the problem is that this ring has an overall diameter greater than the inner diameter of the tyre bead cores into which the ring must be fitted for it to act as support in a tyre and wheel assembly.

The outer surface 2 of the ring is provided with a pair of diametrically spaced radially extending cuts (3 & 4). The cuts (3 & 4) are shown with some width, but in fact they are preferably knife cuts so that no volume of rubber is removed. The two cuts (3 & 4) extend through the outer surface of the ring radially inwards for 85% of the distance through the ring and each terminates in a small circular cross section junction hole (5) which is provided to avoid stress concentration at the ends of the cuts which could cause propagation of the cut into the remainder of the ring. A second pair of diametrically spaced cuts (6 & 7) are provided which extend radially outwards from the inner curved surface (1) and which are positioned mid-way between the first pair of cuts (3 & 4) as shown. Once again the second of cuts (6 & 7) have circular end apertures to avoid crack propagation from the inner ends of the cuts.

Thus in the complete ring in its underformed situation only the very small volumes of rubber for the circular ends (5 & 8) are removed from the otherwise solid rubber ring. However, when it is necessary to fit the ring to a tyre and wheel assembly and it is required to put the ring through the bead ring of a tyre, the ring may easily be collapsed by means of applying two forces F1 & F2 at diametrically opposed points on the ring adjacent to the inner cuts (6 & 7) as shown in figure 2. The positions of the cuts are such that the ring is easily able to deform into the shape shown in figure 2 which results in the diameter of the ring being quite easily reduced to distance A as shown in figure 2 which distance is less than the diameter of the bead cores of the tyre into which the ring is to fitted. Thus the ring can be inserted into the tyre and on removal of the forces the ring is able to recover to its circular shape as shown in figure 1 inside the torroidal cavity of the tyre.

It is also advantageous in some cases to provide short secondary cuts 9 in line with the first cuts 4,5,6 & 7 as shown in Fig.3 to further improve ring flexibility. These secondary cuts 9 are short and circular in section.

Thus the ring having cuts provided in the manner of the present invention can be fairly easily deformed for fitting and this may well be done using the force of a persons' arms even for a ring suitable for a truck tyre which allows installation in the field and avoids the necessity to have special purpose machines to deform the ring for fitting into its tyre cavity.

## Claims

1. An emergency support ring for a pneumatic tyre and wheel rim assembly comprising a continuous ring of elastomeric material having a radially inner surface (1) to contact a wheel rim and a radially outer support surface (2) to contact and support the inner tread of a deflated pneumatic tyre characterised by at least a pair of diametrically spaced radially extending cuts (3,4) extending inwardly from the outer surface (2) towards, but not reaching to, the inner surface (1) such that the ring may readily be flattened in the radial direction when loaded at diametrically spaced points between the cuts.

2. A support ring according to claim 1 characterised by a second pair of diametrically spaced, radial extending cuts (6, 7) which extend outwardly from the inner surface (1) towards but not reaching to the outer surface (2), said second pair each being positioned mid-way between the cuts (3,4) of the first pair.

3. A support ring according to claim 1 or claim 2 characterised in that the cuts (3,4,6,7) each extend for 50 to 95% of the radial thickness of the support ring.

4. A support ring according to claim 3 characterised in that the cuts (3,4,6,7) extend for 85 to 95% of the radial thickness of the support ring.

5. A support ring according to any one of claims 1 to 4 characterised in that each cut (3,4,6 or 7) comprises a slit having no volume.

6. A support ring according to any one of claims 1 to 5 characterised in that the cuts (3,4,6,7) comprise slots having a width less than 2mm moulded into the ring on manufacture.

7. A support ring according to claims 5 or 6 characterised in that the slits or slots (3,4,6,7) comprise a circular or radiused end at the blind or inner end of each slot to resist crack propagation from the slot end.

8. A support ring according to any one of claims 1 to 7 characterised in that the support ring comprises a rubber compound.

# Fig.1.

# Fig.2.

# Fig.3.